# EUROPÄISCHE PATENTSCHRIFT

(11) **EP 0 402 586 B1**
(45) Veröffentlichungstag und Bekanntmachung des Hinweises auf die Patenterteilung: **03.02.1993**
(21) Anmeldenummer: 90106480.8
(22) Anmeldetag: 05.04.1990
(51) Int. Cl.: B60J 3/02

(54) **Sonnenblende für Fahrzeuge**
Sun visor for vehicles
Pare-soleil pour véhicules

(30) Priorität: 10.06.1989 DE 3919021
(43) Veröffentlichungstag der Anmeldung: 19.12.1990
(73) Patentinhaber: Gebr. Happich GmbH, D-42097 Wuppertal (DE)
(72) Erfinder: Viertel, Lothar, D-6636 Altforweiler (DE); Welter, Patrick, FR-57730 La Chambre (FR)

(56) Entgegenhaltungen:
- EP-A- 0 076 174
- EP-B- 0 090 157
- DE-A- 3 005 824
- DE-A- 3 701 760
- DE-C- 2 551 633
- DE-C- 3 601 761

## Beschreibung

Die Erfindung bezieht sich auf eine Sonnenblende für Fahrzeuge mit einem Sonnenblendenkörper, der aus einer ersten Halbschale aus gespritztem Kunststoff und einer damit verbundenen zweiten Halbschale aus Kunststoffschaum besteht, wobei die gespritzte Halbschale eine Lagerausbildung für die einendige Aufnahme einer Sonnenblendenachse und einer diese klemmenden Feder aufweist.

Eine Sonnenblende der gattungsgemäßen Art ist unter anderem durch die EP-A- 00 76 174 bekannt geworden. Solche Sonnenblenden werden von den Benutzern geschätzt, weil sie sich bei der Handhabung, bedingt durch die geschäumte Schalenhälfte, besonders griffig anfühlen. Auch kommt die geschäumte Schalenhälfte, die in der Gebrauchslage der Sonnenblende dem Benutzer zugewandt ist, den heutigen, erhöhten Sicherheitsanforderungen entgegen, weil sie bei einem unfallbedingten Aufprall einen Polstereffekt bewirkt. Andererseits ist es bei solchen zweischaligen, hart-weich ausgeführten Sonnenblenden schwierig, eine die Sonnenblendenachse klemmende Feder, die für die Endrastung und Einstellung der Schwenkpositionen des Sonnenblendenkörpers vorzusehen ist, im Sonnenblendenkörper zu integrieren. Beim Gegenstand der EP-A-00 76 174 z.B. wurde eine spritztechnisch schwierige und werkzeugseitig aufwendige Lagerausbildung für die Sonnenblendenachse und Feder vorgesehen und zudem eine neue Federkonzeption gewählt, die nicht als optimal empfunden wird, zumal die Käuferschaft offenbar Federn, wie sie in der DE-PS 25 51 633 oder EP-B- 00 90 157 gezeigt und beschrieben sind, bevorzugt.

Der vorliegenden Erfindung liegt nun die Aufgabe zugrunde, eine Sonnenblende der eingangs näher erwähnten Art so weiterzubilden, daß sie die Vorteile einer zweischaligen, hart-weichen Ausführung des Sonnenblendenkörpers mit den Vorteilen einer sich in der Praxis hervorragend bewährten Feder der durch die DE-PS 25 51 633 oder EP-B- 00 90 157 bekannt gewordenen Art miteinander vereinigt.

Diese Aufgabe wird der Erfindung zufolge dadurch gelöst, daß die Lagerausbildung auf der der geschäumten Halbschale zugewandten Seite unter positionierter Festlegung der in der Lagerausbildung angeordneten Feder, durch eine Abdeckplatte verschlossen ist.

Die erfindungsgemäß vorgeschlagene Lösung trägt dem Umstand Rechnung, daß die weichelastische Eigenschaft der geschäumten Halbschale nicht geeignet ist, einer Taumelbewegung der Feder beim Verschwenken der Sonnenblende entgegenzuwirken, sofern die geschäumte Halbschale unmittelbar zur Abstützung der Feder herangezogen wird. Hingegen ist eine Abdeckplatte aus hartem, vorzugsweise spritzgegossenem Kunststoffmaterial, die an der gespritzten Halbschale befestigt ist, sehr wohl in der Lage, eine Feder in Verbindung mit der gespritzten Halbschale, nach Art eines Aufnahmenestes zu haltern und zu sichern. Versuche und Berechnungen haben ergeben, daß die Abdeckplatte sich derart einfach und kostengünstig herstellen und montieren läßt, daß eine damit ausgerüstete Sonnenblende nur vernachläßigbar gering verteuert, qualitätsmäßig hingegen wesentlich verbessert wird.

Gemäß einer Ausgestaltung der Erfindung kann vorgesehen sein, daß die Lageraufnahme einander beabstandete Materialansätze mit Lageraugen für die Sonnenblendenachse aufweist, die sowohl an der gespritzten Halbschale als auch an der Abdeckplatte angeformt sind und in verzahnter Anordnung ineinander greifen. Damit ergibt sich schon eine wesentliche Halterung der Abdeckplatte durch die die Lageraugen durchsetzende Sonnenblendeachse. Zusätzlich oder alternativ kann vorgesehen sein, daß die Abdeckplatte an der gespritzten Halbschale durch eine Klemm-, Klips-, Klebe- oder Schweißverbindung festlegbar ist.

Schließlich besteht eine Weiterbildung der Erfindung noch darin, daß die Lagerausbildung mit an der gespritzten Halbschale und/oder Abdeckplatte angeformten Stegen zur Festlegung der Feder in Achsrichtung der Sonnenblendenachse ausgebildet ist.

Ein Ausführungsbeispiel der Erfindung wird nachfolgend anhand der Zeichnung näher erläutert. Es zeigen
Fig. 1 eine perspektivische Ansicht der Sonnenblende mit separat dargestellter Sonnenblendenachse nebst Lagerböckchen,
Fig. 2 eine erste, gespritzte Halbschale des Sonnenblendenkörpers,
Fig 3 eine Einzelheit der Erfindung,
Fig. 4 eine zweite, geschäumte Halbschale des Sonnenblendenkörpers und
Fig. 5 einen die Sonnenblende vervollständigenden, in einem Rahmen eingefaßten Spiegel.

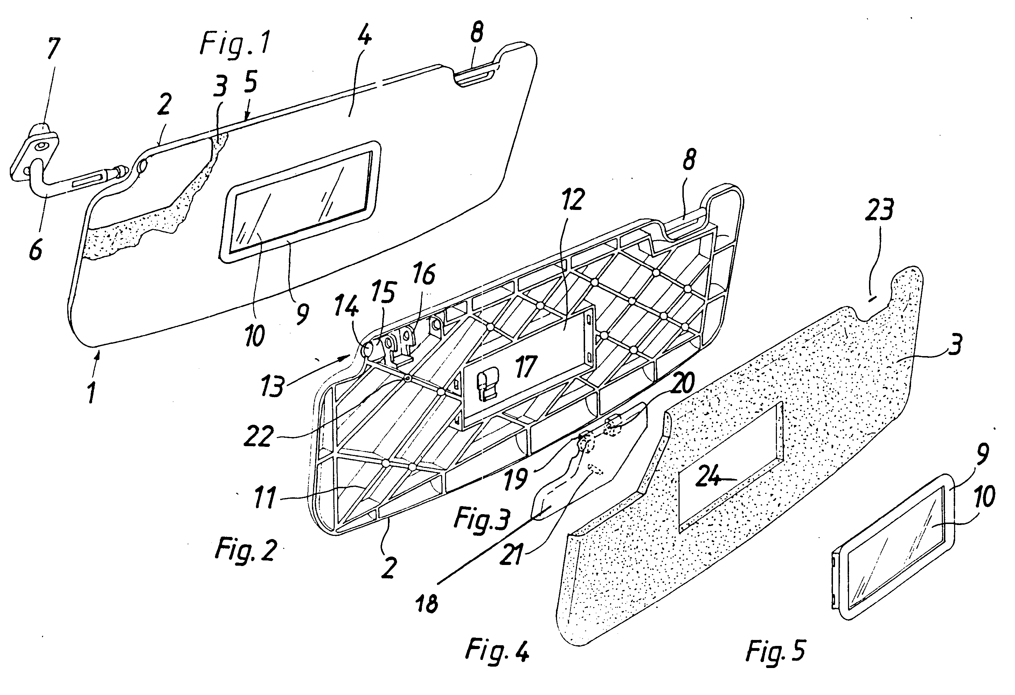

Fig. 1 zeigt einen Sonnenblendenkörper 1, im wesentlichen bestehend aus einer ersten Schalenhälfte 2 aus gespritztem Kunststoff und einer zweiten Schalenhälfte 3 aus geschäumten Kunststoff die etwa in der Mittelebene des Sonnenblendenkörpers 1 gegeneinander gesetzt und gemeinsam mit einem Umhüllungsmaterial 4 ummantelt sind. Der Sonnenblendenkörper 1 weist eine obere Längskante 5 auf. Mit geringem Abstand von der Längskante 5 und im wesentlichen parallel dazu, verläuft eine Klappachse, um die herum der Sonnenblendenkörper 1 aus einer Ruhelage unter dem Fahrzeughimmel in eine Gebrauchslage vor der Windschutzscheibe bewegt werden kann. Die Klappachse wird durch den langen Schenkel der L-förmig ausgebildeten Sonnenblendenachse 6 (deren kurzer Schenkel im Lagerböckchen 7, das seinerseits an der Fahrzeugkarosserie zu befestigen ist, gelagert ist) und dem damit fluchtenden Gegenlagerstift 8 gebildet, wobei der Gegenlagerstift lösbar in einem an der Fahrzeugkarosserie zu befestigenden Gegenlagerböckchen (nicht gezeigt) einrastbar ist. Fig. 1 zeigt weiterhin, daß der Sonnenblendenkörper 1 auch mit einem von einem Rahmen 9 getragenen Spiegel 10 ausgerüstet sein kann. Es sei bemerkt, daß der Sonnenblendenkörper 1 ferner mit einer, hier nicht dargestellten Beleuchtungseinrichtung, die eine Benutzung des Spiegels 10 auch bei Dunkelheit ermöglicht, ausgerüstet sein kann und daß auch eine Abdeckung für den Spiegel in Form eines Schiebers oder Klappdeckels realisierbar ist.

Wie Fig. 2 zeigt, weist die erste, gespritzte Schalenhälfte 2 Versteifungsrippen 11 und eine umrahmte Aufnahmeöffnung 12 für die Aufnahme des Rahmens 9 und des Spiegels 10 auf. Insbesondere ist die erste Schalenhälfte 2 mit einer, insgesamt mit 13 bezeichneten Lagerausbildung ausgeführt, die aus mit Lageraugen 14 ausgebildeten Materialansätzen 15 und Stegen 16 besteht. Die Lageraugen 14 dienen zur Aufnahme der Sonnenblendenachse 6 und die Stege 6 zur seitlichen Abstützung der in Fig. 2 mit dargestellten Rastfeder 17, deren Aufbau in der DE-PS 25 51 633 oder EP-B- 00 90 157 beschrieben ist, so daß hier auf weitere Erläuterungen verzichtet werden kann. Nach dem Einsetzen der U-förmigen Rastfeder 17 in den durch die Stege 16 gebildeten Aufnahmeraum wird dieselbe in Richtung zur Schalenhälfte 3 hin gesichert, wozu eine in Fig. 3 dargestellte Abdeckplatte 18 vorgesehen ist, die aus einem Kunststoffspritzgußteil besteht. Die Abdeckplatte 18 weist Materialansätze 19 mit Lageraugen 20 auf und die Materialansätze 19 greifen zwischen die Materialansätze 15 und Stege 16 der Schalenhälfte 2. Die Lageraugen 14 und 20 bilden gemeinsam eine Drehlageraufnahme für die Sonnenblendenachse 6. An der Abdeckplatte 18 ist weiterhin ein Zapfen 21 angeformt, der in eine Zapfenaufnahme 22 der Schalenhälfte 2 einklemmbar ist. Die Abdeckplatte 18 kann auch durch eine Klips-, Klebe- oder Schweißverbindung an der Schalenhälfte 2 festgelegt sein. Wesentlich ist, daß die Lagerausbildung 13 ein die Feder 17 allseitig abstützendes Nest bildet,und zwar in Verbindung mit der Abdeckplatte 18. Die zweite Schalenhälfte 3 besteht aus Schaumkunststoff und ist vorzugsweise aus Polypropylen-Partikelschaum gebildet. Die Schalenhälfte 3 entspricht in ihren Flächenabmessungen der Schalenhälfte 2 und sie weist an ihrem oberen Rand 5 eine Aussparung 23 für den Gegenlagerstift 8 (der z.B. einstückig mit der schalenhälfte 2 ausgebildet ist aber auch als Losteil nachträglich montiert werden kann) und in der Fläche einen Durchbruch 24 für die Spiegelbaueinheit 9, 10 auf.

## Patentansprüche

1. Sonnenblende für Fahrzeuge, mit einem Sonnenblendenkörper (1), der aus einer ersten Halbschale (2) aus gespritztem Kunststoff und einer damit verbundenen zweiten Halbschale (3) aus Kunststoffschaum besteht, wobei die gespritzte Halbschale (2) eine Lagerausbildung (13) für die einendige Aufnahme einer Sonnenblendenachse (6) und einer diese klemmenden Feder (17) aufweist, dadurch gekennzeichnet, daß die Lagerausbildung (13) auf der, der geschäumten Halbschale (3) zugewandten Seite, unter positionierter Festlegung der in der Lagerausbildung (13) angeordneten Feder (17), durch eine Abdeckplatte (18) verschlossen ist.

2. Sonnenblende nach Anspruch 1, dadurch gekennzeichnet, daß die Lagerausbildung (13) einander beabstandete Materialansätze (15, 19) mit Lageraugen (14, 20) für die Sonnenblendenachse (6) aufweist, die sowohl an der gespritzten Halbschale (2) als auch an der Abdeckplatte (18) angeformt sind und in verzahnter Anordnung ineinandergreifen.

3. Sonnenblende nach Anspruch 1 oder 2, dadurch gekennzeichnet, daß die Abdeckplatte (18) an der gespritzten Halbschale (2) durch eine Klemm-, Klips-, Klebe- oder Schweißverbindung festgelegt ist.

4. Sonnenblende nach einem oder mehreren der Ansprüche 1 bis 3, dadurch gekennzeichnet, daß die Lagerausbildung (13) mit an der gespritzten Halbschale (2) und/oder Abdeckplatte (18) angeformten Stegen (16) zur Festlegung der Feder (17) in Achsrichtung der Sonnenblendenachse (6) ausgebildet ist.

## Claims

1. A sun visor for vehicles, with a sun visor body (1), which comprises a first half shell (2) of injected plastics and a second half shell (3), connected therewith, of plastic foam, in which the injected half shell (2) has a bearing construction (13) to receive at one end a sun visor shaft (6) and a spring (17) clamping the latter, characterised in that the bearing construction (13) is closed by a cover plate (18), on the side facing the foamed half shell (3), with positive location of the spring (17) arranged in the bearing construction (13).

2. A sun visor according to Claim 1, characterised in that the bearing construction (13) has material portions (15), spaced apart from each other, with bearing eyes (14, 20) for the sun visor shaft (6), which are formed both on the injected half shell (2) and also on the cover plate (18) and engage into each other in interengaging arrangement.

3. A sun visor according to Claim 1 or 2, characterised in that the cover plate (18) is secured on the injected half shell (2) by a clamping-, clip-, adhesion- or welded- connection.

4. A sun visor according to one or more of Claims 1 to 3, characterised in that the bearing construction (13) is constructed with cross-pieces (16), formed on the injected half shell (2) and/or cover plate (18), to secure the spring (17) in the axial direction of the sun visor shaft (6).

## Revendications

1. Pare-soleil pour véhicule automobile, comportant un corps (1) qui est constitué d'une première demi-coque (2) en matière plastique moulée par injection et d'une seconde demi-coque (3), en mousse synthétique, assemblée à la première, la demi-coque (2) moulée par injection formant un palier (13) destiné à loger une extrémité d'un axe (6) du pare-soleil et présentant un ressort (17) bloquant celui-ci, caractérisé en ce que le palier (13) est fermé par une plaque de couverture (18) sur le côté, tourné vers la demi-coque (3) en mousse, par fixation positionnée du ressort (17) placé dans le palier (13).

2. Pare-soleil selon la revendication 1, caractérisé en ce que le palier (13) comporte des surépaisseurs de matière (15, 19), écartées l'une de l'autre, avec des oeillets (14, 20) pour l'axe (6) du pare-soleil, qui sont formées sur la demi-coque (2) moulée par injection ainsi que sur la plaque de couverture (18) et qui engrènent l'une dans l'autre à la manière de dents.

3. Pare-soleil selon la revendication 1 ou 2, caractérisé en ce que la plaque de couverture (18) est fixée sur la demi-coque (2) moulée par injection par un assemblage serré, clipsé, collé ou soudé.

4. Pare-soleil selon une ou plusieurs des revendications 1 à 3, caractérisé en ce que le palier (13) comporte des cloisons (16) formées sur la demi-coque (2) moulée par injection et/ou sur la plaque de couverture (18), afin de fixer le ressort (17) dans la direction de l'axe (6) du pare-soleil.
